# EUROPEAN PATENT SPECIFICATION

(11) **EP 0 748 707 B1**
(45) Date of publication and mention of the grant of the patent: **22.03.2000**
(21) Application number: 96304441.7
(22) Date of filing: 13.06.1996
(51) Int. Cl.: B60D 1/02

(54) **Automatically setting draw pin assembly**
Selbsttätige Zugkupplung
Attelage automatique

(30) Priority: 14.06.1995 US 490232
(43) Date of publication of application: 18.12.1996
(73) Proprietor: OLSON, Brian, R., Regina, Saskatchewan S4S 2T8 (CA)
(72) Inventor: OLSON, Brian, R., Regina, Saskatchewan S4S 2T8 (CA)
(74) Representative: Adkins, Michael

(56) References cited:
- CA-A- 1 228 381
- US-A- 2 442 439
- US-A- 4 073 507

## Description

The present invention relates to vehicle couplings, especially of the agricultural draw pin type.

Conventional practice in coupling an implement hitch to a draw bar using a draw pin has been to align the draw bar of the towing vehicle with the towed implement hitch, and then to couple the two with the draw pin. While certain practical power-operated devices have been introduced recently, manual hook-up is still the norm.

One form of automated draw pin assembly comprises:
a draw bar assembly with a draw bar and a hammer strap with respective draw pin holes and a hitch-receiving space between the draw bar and the hammer strap;
a draw pin movable between a retracted position engaged in the draw pin hole in the hammer strap and clear of the hitch-receiving space between the draw bar and the hammer strap, and a set position with the draw pin extending through the aligned draw pin holes in the draw bar and the hammer strap;
latch means having a supporting position for latching the draw pin in the retracted position, and a released position releasing the draw pin to move into the set position; and
trigger means projecting into the hitch-receiving space between the draw bar and the hammer strap for engaging an implement hitch entering the space, the trigger means including means responsive to engagement of the hitch with the trigger means for releasing the latch means to allow the draw pin to fall into the set position in engagement with the hitch, the draw bar and the hammer strap.

An assembly of this type is disclosed in US 2,442,439. In that assembly, the latch means is an elaborate spring-loaded linkage mounted on top of the upper hitch plate. This is more complex than what is desired for the harsh and demanding conditions of modem agricultural uses. This assembly will interfere with the use of a power take off (PTO) on a tractor with which it is used. This interference is further augmented by the current trend in draw bar design to use a hammer strap on the draw bar to provide a clevis type connection to the hitch of the towed implement. This further raises the height of the basic draw bar assembly to the extent that, when the draw pin is installed, there may be insufficient clearance for the tractor PTO. This effect is augmented with any draw pin setting mechanism like that described above which extends above the hammer strap.

According to the present invention a draw pin assembly of the above type is characterised in that:
when the draw pin is in the set position,
the top end of the draw pin is recessed fully into the hammer strap, and
the latch means are below the top end of the draw pin.

Thus, when the draw pin is set, no part of the assembly extends above the top of the hammer strap. This provides the maximum clearance for the tractor PTO.

Preferably, the assembly includes a lock that is engaged automatically when the draw pin has set to prevent the inadvertent release of the draw pin.

Preferred embodiments are characterised in that:
the assembly includes a loop handle pivotally mounted on the draw pin;
the hammer strap includes a recess for receiving a portion of the handle adjacent to the draw pin when the draw pin is in the set position; and
the hammer strap has a lock seat with which the handle may be engaged to prevent the draw pin being forced out of the set position.

In a preferred embodiment of the assembly, the latch means comprises the loop handle and a cradle in the top of the hammer strap, the handle has a latching position engaged with the cradle and supporting the draw pin in the retracted position.

In the accompanying drawings, which illustrate exemplary embodiments of the invention;
Figure 1 is a side view of an embodiment of the present invention; and

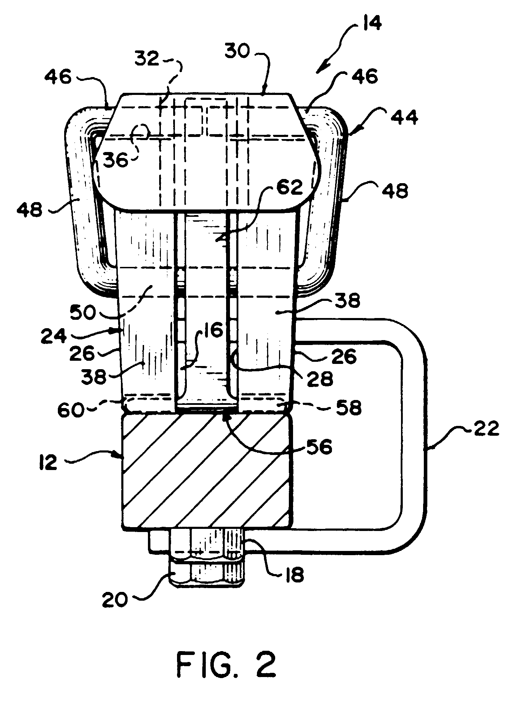

Figure 2 is a view along line 2-2 of Figure 1.

Referring to the drawings, there is illustrated a draw pin assembly 10 including a draw bar 12 of conventional form and a hammer strap 14 mounted on the draw bar. The hammer strap 14 has a base section 16 that is fixed to the draw bar 12 using two bolts 18 and 20. The bolt 20 is also used to fasten a C-shaped chain support 22 to the draw bar 12. An offset section 24 of the hammer strap 14 projects upwardly from the base section 16. It includes two side plates 26 separated by an open centre zone 28. Extending from the offset section rearwardly over the draw bar 12 is an arm 30 of the hammer strap 14 that has a draw pin hole 32 aligned with a draw pin hole 34 of the draw bar 12. Across the top of the hammer strap 14, intersecting the draw pin hole 34 of the draw bar 12. Across the top of the hammer strap 14, intersecting the draw pin hole 32, is a slot 36, the function of which will be described more fully in the following.

Front faces 38 of the side plates 26 converge towards the centre to provide a "cup" for centring an implement hitch (not shown) entering into a space 39 between the draw bar 12 and the hammer strap 14.

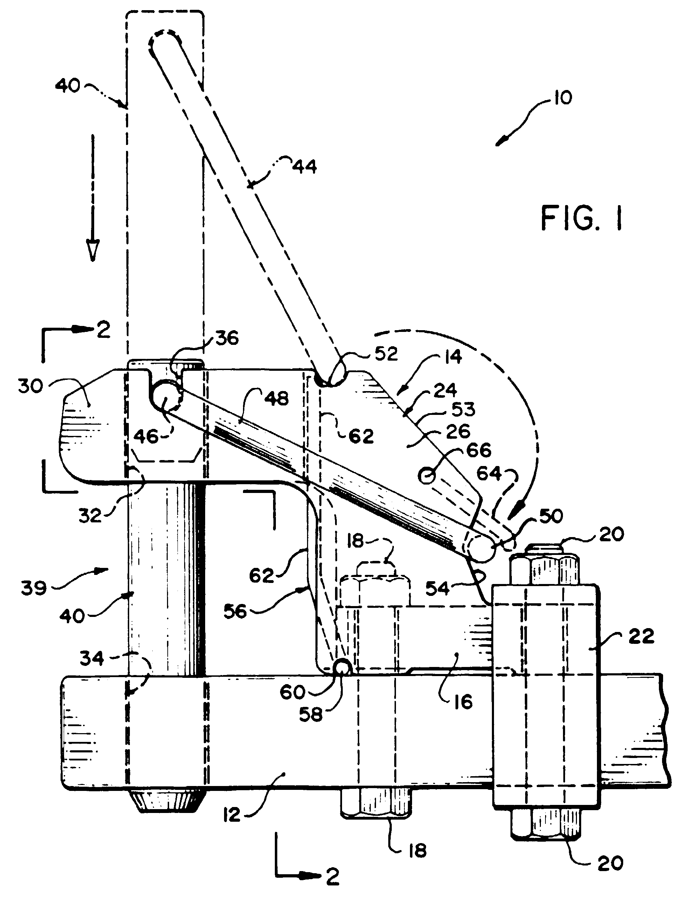

A draw pin 40 fits into the two draw pin holes 32 and 34. In the set position illustrated in solid lines in Figure 1, the draw pin is recessed fully into the hammer strap so that there is no projection above the top face of the hammer strap. The draw pin is equipped with a loop type handle 44 with lateral sections 46 projecting diametrically from the draw pin, near the top end. The lateral sections merge into two arms 48 which in turn merge into opposite ends of a cross arm 50. The handle pivots freely on the draw pin, about the axis of the two lateral sections 46.

A cradle 52 is formed in the top of the hammer strap, forwardly from the draw pin hole. In the retracted position of the draw pin, shown in ghost lines in Figure 1, the cross arm 50 engages in the cradle 52 so that the handle 44 will act as a latch member supporting the draw pin in the retracted position. Immediately forwardly from the cradle 52, the side plates of the hammer strap have surfaces 53 that slope downwardly and to the front. Below the sloping face 53 and above the base 14, each side plate has a lateral stop notch 54.

When the draw pin is in the set position, as illustrated in solid lines in Figure 1, the handle falls into the stop notch 54. The lateral sections 46 of the handle engage in the slot 36 and support the draw pin in the set position. Any force tending to urge the draw pin up will pull the handle into the stop notch 54, preventing movement of the draw pin. To release the draw pin, the handle 44 is simply pivoted upwardly out of the stop notch and used to raise the draw pin.

The assembly 10 is equipped with a trigger 56. This is an inverted, T-shaped component with two base pins 58 extending across the top of the drawbar and retained in place by two grooves 60 immediately in front of the hitch-receiving space 39. The upright arm 62 slopes upwardly and into the hitch-receiving space 39 and extends up to the top of the hammer strap where it is seated between the two side plates 26, against the front of the arm 30. The top end of the trigger arm 62 extends into the cradle 52. When an implement hitch engages the trigger 56, it is pivoted to the front, dislodging the handle 44 from the cradle 52, so that the handle no longer supports the draw pin. The draw pin will then drop into place and the handle will slide down the front of the hammer strap into the stop notch 54.

In some instances it may be desired to ensure against inadvertent release of the handle from the stop notch. In such a case, a retainer 64 (Figure 1) may be mounted on the hammer strap using lateral bores 66 in the side plates 26. When desired, this may be positioned to retain the handle in the stop notch. The retainer can be used if it is desired to mount the hammer strap on the bottom side of the drawbar.

To hook up, the tractor is backed up until the implement hitch aligns with the tractor hammer strap. This is facilitated by a cupped section 68 at the back end of the hammer strap which guides the implement hitch into proper alignment. The implement hitch will push back on the unlocking trigger 62, releasing the draw pin. The draw pin then drops into the space between the hammer strap and the draw bar. Depending on the size of the hole in the implement hitch, the draw pin will pass through the hitch and into the draw pin hole 34 in the draw bar, or it will remain partway set until the implement hitch is drawn slightly to the rear so that the implement hitch is fully aligned with the draw pin. When the draw pin sets fully, the handle 44 assumes the locked position, thus automatically locking the coupling.

While one particular embodiment of the invention has been described in the foregoing, it is to be understood that other embodiments are possible within the scope of the invention. The invention is to be construed as limited solely by the scope of the appended claims.

## Claims

1. A draw pin assembly comprising:
a draw bar assembly with a draw bar (12) and a hammer strap (14) with respective draw pin holes (34, 32) and a hitch-receiving space (39) between the draw bar and the hammer strap;
a draw pin (40) movable between a retracted position engaged in the draw pin hole (32) in the hammer strap and clear of the hitch-receiving space (39) between the draw bar and the hammer strap, and a set position with the draw pin extending through the aligned draw pin holes in the draw bar and the hammer strap;
latch means (44) having a supporting position for latching the draw pin in the retracted position, and a released position releasing the draw pin to move into the set position; and
trigger means (56) projecting into the hitch-receiving space between the draw bar and the hammer strap for engaging an implement hitch entering the space, the trigger means including means responsive to engagement of the hitch with the trigger means for releasing the latch means to allow the draw pin to fall into the set position in engagement with the hitch, the draw bar and the hammer strap,
characterised in that:
when the draw pin (40) is in the set position,
the top end of the draw pin (40) is recessed into the hammer strap (14), and
the latch means (44) are below the top end of the draw pin (40).

2. An assembly according to claim 1, further comprising lock means (64) for locking the draw pin (40) in the set position in response to movement of the draw pin to the set position.

3. An assembly according to claim 1 or claim 2, wherein the latch means comprise a latch member (44) with supporting and locking positions for retaining the draw pin (40) in the retracted and set positions respectively.

4. An assembly according to claim 3, wherein the hammer strap (14) includes a lock seat (54) for engaging the latch member (64) in the locking position thereof, and for preventing movement of the draw pin (40) from the set position.

5. An assembly according to claim 3 or claim 4, wherein the latch member (44) is pivotally connected to the draw pin (40) adjacent to an upper end thereof, and the latch means further comprises a cradle (52) in the hammer strap (14) for engaging the latch member in the supporting position of the latch member to support the draw pin in the retracted position.

6. An assembly according to claim 5, wherein the trigger means (56) comprise means (62) for displacing the latch member (44) from engagement with the cradle (52).

7. An assembly according to any preceding claim, wherein, in the set position of the draw pin (40), the draw pin is recessed fully into the hammer strap (14).

8. An assembly according to claim 7, wherein the latch member (44) projects laterally from the draw pin (40), and the hammer strap (14) includes a recess (36) for receiving the latch member (44) in the set position of the draw pin.

9. An assembly according to claim 8, wherein the recess (36) in the hammer strap (14) receives a portion of the handle.

10. An assembly according to any one of claims 4 to 6, wherein the latch member (44) is freely pivotable from engagement with the lock seat (54).

11. An assembly according to any one of claims 4 to 10, wherein the latch member comprises a loop handle (44) pivotally mounted on the draw pin (40).

## Patentansprüche

1. Zugbolzenanordnung, umfassend:
eine Zugstangenanordnung mit einer Zugstange (12) und einem Hakenbügel (14) mit jeweiligen Zugbolzen-Löchern (34, 32) und einem Deichsel-Aufnahmeraum (39) zwischen der Zugstange und dem Hakenbügel;
einen Zugbolzen (40), welcher zwischen einer ausgezogenen Position, in welcher dieser im Zugbolzen-Loch (32) in dem Hakenbügel aufgenommen ist und den Deichsel-Aufnahmeraum (39) zwischen der Zugstange und dem Hakenbügel freigibt, und einer abgesetzten Position bewegbar ist, in welcher sich der Zugbolzen durch die zueinander ausgerichteten Zugbolzen-Löcher in der Zugstange und in dem Hakenbügel erstreckt;
ein Klinkenmittel (44) mit einer Stützpostition zum Einklinken des Zugbolzens in der ausgezogenen Stellung und mit einer Freigabeposition, welche den Zugbolzen zur Bewegung in die abgesetzte Position freigibt; und
ein Auslösemittel (56), welches in den Deichsel-Aufnahmeraum zwischen der Zugstange und dem Hakenbügel für ein gegenseitiges Angreifen mit einer in den Zwischenraum eindringenden Gerätedeichsel vorsteht, wobei das Auslösemittel ein Mittel aufweist, welches auf ein gegenseitiges Angreifen der Deichsel und des Auslösemittels zum Freigeben des Klinkenmittels anspricht, um zu ermöglichen, daß der Zugbolzen in die abgesetzte Position in Eingriff mit der Deichsel, der Zugstange und dem Hakenbügel fällt,
dadurch gekennzeichnet,
daß dann, wenn der Zugbolzen (40) sich in der abgesetzten Position befindet,
das obere Ende des Zugbolzens (40) in den Hakenbügel (14) eingelassen ist und das Klinkenmittel (44) unterhalb des oberen Endes des Zugbolzens (40) liegt.

2. Anordnung nach Anspruch 1, ferner umfassend ein Blockiermittel (64) zum Blockieren des Zugbolzens (40) in der abgesetzten Position in Antwort auf eine Bewegung des Zugbolzens in Richtung der abgesetzten Position.

3. Anordnung nach Anspruch 1 oder 2, wobei das Klinkenmittel ein Einklinkelement (44) mit einer Stützposition und einer Blockierposition zum Halten des Zugbolzens (40) jeweils in der ausgezogenen und in der abgesetzten Position umfaßt.

4. Anordnung nach Anspruch 3, wobei der Hakenbügel (14) einen Blockiersitz (54) umfaßt zum Angreifen an dem Einklinkelement (64) in dessen Blockierposition und zum Verhindern einer Bewegung des Zugbolzens (40) aus seiner abgesetzten Position heraus.

5. Anordnung nach Anspruch 3 oder 4, wobei das Einklinkelement (44) schwenkbar mit dem Zugbolzen (40) benachbart zu dessen oberem Ende verbunden ist und wobei das Einklinkmittel ferner ein Lager (52) in dem Hakenbügel (14) für ein In-Eingriff-Gelangen mit dem Einklinkelement in der Stützposition des Einklinkelements umfaßt, um den Zugbolzen in der ausgezogenen Stellung zu stützen.

6. Anordnung nach Anspruch 5, wobei das Auslösemittel (56) ein Mittel (62) zum Verlagern des Einklinkelements (44) außer Eingriff mit dem Lager (52) aufweist.

7. Anordnung nach einem der vorangehenden Ansprüche, wobei der Zugbolzen in der abgesetzten Stellung des Zugbolzens (40) vollständig in den Hakenbügel (14) eingelassen ist.

8. Anordnung nach Anspruch 7, wobei das Einklinkelement (44) seitlich vom Zugbolzen (40) vorsteht und wobei der Hakenbügel (14) eine Ausnehmung (36) zur Aufnahme des Einklinkelements (44) in der abgesetzten Position des Zugbolzens aufweist.

9. Anordnung nach Anspruch 8, wobei die Ausnehmung (36) in dem Hakenbügel (14) einen Teil des Griffs aufnimmt.

10. Anordnung nach einem der Ansprüche 4 bis 6, wobei das Einklinkelement (44) frei außer Eingriff mit dem Blockiersitz (54) schwenkbar ist.

11. Anordnung nach einem der Ansprüche 4 bis 10, wobei das Einklinkelement einen Ringgriff (44) umfaßt, welcher schwenkbar an dem Zugbolzen (40) angebracht ist.

## Revendications

1. Ensemble d'attelage, comprenant :
- un ensemble à barre de traction comprenant une barre de traction (12) et une languette de marteau (14) avec des perçages respectifs (34, 32) pour un axe d'attelage, et un espace de réception (39) pour un timon entre la barre de traction et la languette de marteau ;
- un axe d'attelage (40) mobile entre une position rétractée engagée dans le perçage (32) d'axe dans la languette de marteau, et libérant l'espace de réception (39) entre la barre de traction et la languette de marteau, et une position engagée dans laquelle l'axe d'attelage s'étend à travers les perçages alignés dans la barre de traction et dans la languette de marteau ;
- des moyens de verrouillage (44) présentant une position de support pour verrouiller l'axe d'attelage dans la position rétractée, et une position libérée libérant l'axe d'attelage pour se déplacer jusque dans la position engagée ; et
- des moyens de déclenchement (56) qui se projettent jusque dans l'espace de réception de timon entre la barre de traction et la languette de marteau afin d'engager le timon d'une remorque pénétrant dans ledit espace, les moyens de déclenchement comprenant des moyens réagissant à l'engagement du timon avec les moyens de déclenchement pour libérer les moyens de verrouillage et permettre à l'axe d'attelage de tomber jusque dans la position engagée en engagement avec le timon, avec la barre de traction et avec la languette de marteau,
caractérisé en ce que :
lorsque l'axe d'attelage (40) est dans la position engagée,
l'extrémité supérieure de l'axe d'attelage (40) est effacée dans la languette de marteau (14), et
les moyens de verrouillage (44) sont au-dessous de l'extrémité supérieure de l'axe d'attelage (40).

2. Ensemble selon la revendication 1, comprenant en outre des moyens de blocage (64) pour bloquer l'axe d'attelage (40) dans la position engagée en réponse au mouvement de l'axe d'attelage vers la position engagée.

3. Ensemble selon l'une ou l'autre des revendications 1 et 2, dans lequel les moyens de verrouillage comprennent un élément de verrouillage (44) avec une position de supportage et une position de blocage afin de retenir l'axe d'attelage (40) dans la position rétractée et dans la position engagée, respectivement.

4. Ensemble selon la revendication 3, dans lequel la languette de marteau (14) inclut un siège de blocage (54) pour engager l'élément de verrouillage (64) dans la position de blocage de celui-ci, et pour empêcher le mouvement de l'axe d'attelage (40) depuis la position engagée.

5. Ensemble selon l'une ou l'autre des revendications 3 et 4, dans lequel l'élément de verrouillage (44) est connecté en pivotement à l'axe d'attelage (40) en position adjacente à l'extrémité supérieure de celle-ci, et les moyens de verrouillage comprennent en outre un berceau (52) dans la languette de marteau (14) pour engager l'élément de verrouillage dans la position de supportage de l'élément de verrouillage afin de supporter l'axe d'attelage dans la position rétractée.

6. Ensemble selon la revendication 5, dans lequel les moyens de déclenchement (56) comprennent des moyens (62) pour déplacer l'élément de verrouillage (44) depuis son engagement avec le berceau (52).

7. Ensemble selon l'une quelconque des revendications précédentes, dans lequel, dans la position engagée de l'axe d'attelage (40), l'axe d'attelage est entièrement effacé dans la languette de marteau (14).

8. Ensemble selon la revendication 7, dans lequel l'élément de verrouillage (44) se projette latéralement depuis l'axe d'attelage (40), et la languette de marteau (14) inclut un évidement (36) pour recevoir l'élément de verrouillage (44) dans la position engagée de l'axe d'attelage.

9. Ensemble selon la revendication 8, dans lequel l'évidement (36) dans la languette de marteau (14) reçoit une partie de la poignée.

10. Ensemble selon l'une quelconque des revendications 4 à 6, dans lequel l'élément de verrouillage (44) est susceptible de pivoter librement depuis son engagement avec le siège de blocage (54).

11. Ensemble selon l'une quelconque des revendications 4 à 10, dans lequel l'élément de verrouillage comprend une poignée à boucle (44) montée en pivotement sur l'axe d'attelage (40).
